# EUROPÄISCHE PATENTSCHRIFT

(11) **EP 0 730 994 B1**
(45) Veröffentlichungstag und Bekanntmachung des Hinweises auf die Patenterteilung: **08.05.2002**
(21) Anmeldenummer: 96100002.3
(22) Anmeldetag: 02.01.1996
(51) Int. Cl.: B60N 3/10

(54) **Halterung für einen Getränkebehälter**
Support for a beverage container
Support pour un conteneur de boisson

(30) Priorität: 04.03.1995 DE 19507612
(43) Veröffentlichungstag der Anmeldung: 11.09.1996
(73) Patentinhaber: fischerwerke Artur Fischer GmbH & Co. KG, 72178 Waldachtal (DE); AUDI AG, 85045 Ingolstadt (DE)
(72) Erfinder: Bieck, Torsten, Dipl.-Ing., D-72178 Waldachtal (DE); Simmel, August Dipl.-Ing., D-85139 Wettstetten (DE); Wagner, Brigitte Dipl.-Ing., D-85101 Lenting (DE); Breyer, Gunter, D-85055 Ingolstadt (DE)

(56) Entgegenhaltungen:
- DE-C- 4 306 935
- DE-C- 4 429 515
- US-A- 4 583 707

## Beschreibung

Die Erfindung betrifft eine Halterung für einen Getränkebehälter, beispielsweise eine Getränkebüchse, einen Becher oder eine Tasse, der versenkt in einer in etwa horizontalen Fläche, beispielsweise einer Mittelkonsole eines Kraftwagens anbringbar ist.

Eine derartige gattungsgemäße Halterung ist bekannt aus der DE 43 06 935 C1. Die bekannte Halterung weist ein schmales Gehäuse auf, das versenkt in bspw. eine Mittelkonsole eines Kraftwagens einbaubar ist. An einem Ende des Gehäuses ist ein Schwenkarm schwenkbar gelagert. Der Schwenkarm ist aus einer horizontal liegenden Stellung, in der er das Gehäuse abdeckt, in eine vertikal nach oben stehende Stellung schwenkbar. Am anderen Ende des Gehäuses ist ein verschiebbarer Arm vertikal stehend angeordnet, der mit einer Schiebeführung aus einer im Gehäuse versenkten Stellung in eine vom Gehäuse vertikal nach oben stehende Haltestellung verschiebbar geführt ist. Der verschiebbare Arm weist eine Verzahnung nach Art einer Zahnstange auf. Über ein Zahnradgetriebe sind der Schwenkarm und der verschiebbare Arm miteinander verbunden, so dass beim Schwenken des Schwenkarms aus der liegenden in die stehende Stellung der verschiebbare Arm in die Haltestellung angehoben wird und umgekehrt. Befinden sich beide Arme in der nach oben stehenden Stellung, kann eine Getränkedose zwischen die Arme gestellt werden. Die Getränkedose steht auf oberen Längsrändern des Gehäuses und wird an einander gegenüberliegenden Umfangsabschnitten von den beiden Armen gehalten. Soll die bekannte Halterung schmal ausgebildet werden, müssen auch ihre beiden Arme schmal ausgebildet werden und halten eine eingestellte Getränkedose auf schmalen Umfangsabschnitten. Zum kippsicheren Halten einer eingestellten Getränkedose ist deswegen eine Mindestbreite der Halterung notwendig.

Weiterer Nachteil ist, dass zum kippsicheren Halten allenfalls kleine Durchmesserabweichungen der eingestellten Getränkedose möglich sind.

Der Erfindung liegt die Aufgabe zugrunde, eine Halterung der vorstehend erläuterten Art vorzuschlagen, die bei schmaler Ausbildung einen verbesserten Halt für einen eingestellten Getränkebehälter gegen Kippen ausweist.

Diese Aufgabe wird erfindungsgemäß durch die Merkmale des Anspruchs 1 gelöst. Die erfindungsgemäße Halterung weist zwei Arme auf, die in eine einander gegenüberstehende Stellung bringbar sind, in welcher ein Getränkebehälter zwischen sie eingestellt werden kann. Um die erfindungsgemäße Halterung möglichst schmal bauen und trotzdem einen in sie eingestellten Getränkebehälter über ausreichend große Umfangsabschnitte umfassen zu können, um den Getränkebehälter sicher gegen Kippen zu halten, weist der verschiebbare Arm der erfindungsgemäßen Halterung zwei zur Seite ausschwenkbare Halteflügel auf. Diese sind in der Haltestellung des verschiebbaren Arms so nach außen geschwenkt, daß sie in etwa in Umfangsrichtung eines in die erfindungsgemäße Halterung eingestellten Getränkebehälters stehen und den Umfangsabschnitt , auf dem der verschiebbare Arm den eingestellten Getränkebehälter umfasst, vergrößern. Die Arme einschließlich der Halteflügel umgreifen den Getränkebehälter an einander gegenüberliegenden Umfangsabschnitten und halten diesen sicher. Die erfindungsgemäße Halterung hat den Vorteil, daß sie insbesondere wesentlich schmaler als ein in sie einzustellender Getränkebehälter ausgebildet werden kann und diesen trotzdem über ausreichend große Umfangsabschnitte umfaßt, um ihn sicher zu halten.

In ihrer versenkten bzw. liegenden Stellung stehen die beiden Arme nicht über die Fläche vor, in welche die erfindungsgemäße Halterung eingebaut ist. Die beiden Haltearme sind durch ihre gelenkige Verbindung miteinander zwangsgeführt, so daß sie sich stets gemeinsam bewegen. Durch die Zwangsführung der beiden Arme miteinander genügt es, einen der Arme zu bewegen, um die erfindungsgemäße Halterung in eine offene Stellung, in der ein Getränkebehälter in sie eingestellt werden kann, oder in eine in der Einbaufläche versenkte Stellung zu verbringen, da sich der jeweils andere Arm stets mit dem bewegten Arm mitbewegt.

Bei der Bewegung des verschiebbaren Arms nach unten in die versenkte Stellung schwenken die Halteflügel nach innen, so daß sie seitlich nicht über den verschiebbaren Arm vorstehen und zusammen mit diesem in einer Öffnung in der Fläche, in welcher die Halterung angebracht ist, versenkbar sind. Die Breite eines Einbauraums für die erfindungsgemäße Halterung wird durch die Halteflügel nicht vergrößert.

Die beiden Arme müssen nicht vertikal stehen, sie können auch schräg nach außen der Form eines konischen Bechers angepaßt oder bei Bedarf schräg nach innen stehend ausgebildet sein. Der Schwenkwinkel des Schwenkarms beträgt infolgedessen nicht in jedem Fall 90°, er kann größer oder kleiner sein. Auch ist ein Einbau der erfindungsgemäßen Halterung in eine geneigte Fläche möglich und trotzdem können die beiden Arme in eine vertikale Stellung verbringbar ausgebildet sein. Auch in diesem Fall beträgt der Schwenkwinkel des Schwenkarms nicht 90°, sondern von der Neigung der Einbaufläche abhängig mehr oder weniger.

Die Führung des verschiebbaren Arms muß nicht gerade sein, sie kann auch im Bogen verlaufen. In letzterem Fall ist die Führung vorzugsweise in Richtung einer Schwenkachse des Schwenkarms gekrümmt, die jedoch nicht im Mittelpunkt des Bogens der Führung angeordnet sein muß.

Das Ausschwenken der Halteflügel erfolgt vorzugsweise mittels eines Steuernockens an jedem Halteflügel, der gegen eine ortsfeste Steuerrippe gelangt, wenn der verschiebbare Arm in seine Haltestellung nach oben bewegt wird, und der dadurch den jeweiligen Halteflügel nach außen verschwenkt.

Abschnitte der unteren Ränder der Halteflügel sind bei einer bevorzugten Ausgestaltung der Erfindung als Rückstellflächen ausgebildet. Diese gleiten beim Versenken des verschiebbaren Arms an ortsfesten Gegenflächen entlang und schwenken dabei die Halteflügel nach innen. Als Gegenflächen können Seitenränder der Öffnung, in welche die beiden Arme versenkbar sind, dienen. Vorzugsweise sind die Rückstellflächen als Spiralflächen ausgebildet.

Bei einer Weiterbildung der Erfindung verläuft die Führung des verschiebbaren Arms in ihrem Mittelbereich tangential zur Schwenkachse des Schwenkarms und damit schräg in Richtung des Schwenkarms bzw. dessen Schwenkachse von einer horizontalen Stellebene für einen in die Halterung eingestellten Getränkebehälter nach unten. Dadurch wird erreicht, daß die Führung in ihrem Mittelbereich in Richtung eines gedachten Kreisbogens um die Schwenkachse des Schwenkarms verläuft. Die Winkelabweichung der Enden der Führung von einem solchen Kreisbogen wird auf diese Weise klein gehalten. Infolgedessen wirkt eine beim Verschwenken des Schwenkarms über dessen gelenkige Verbindung an dem verschiebbaren Arm angreifende Kraft im wesentlichen in Richtung der Führung. Eine Kraftkomponente quer zur Führung ist im Mittelbereich der Führung Null und zu den Enden der Führung hin klein. Die zum Aufstellen und zum Versenken der beiden Arme der erfindungsgemäßen Halterung notwendige Kraft wird auf diese Weise klein gehalten und insbesondere ein Verklemmen des verschiebbaren Arms in seiner Führung vermieden.

Um auch bei einer schrägen Einbaulage der erfindungsgemäßen Halterung eine horizontale Stellfläche für einen eingestellten Getränkebehälter zu haben, weist bei einer Ausgestaltung der Erfindung der Schwenkarm eine solche Stellfläche auf. Die Stellfläche schwenkt mit dem Schwenkarm mit. Sie ist in einem solchen Winkel zu ihm angeordnet, daß sie bei stehendem Schwenkarm ihre horizontale Lage einnimmt. Vorzugsweise sind der Schwenkarm und seine Stellfläche einstückig.

Eine weitere Möglichkeit, eine stets horizontale Stellfläche zu haben besteht gemäß einer Ausführungsform der Erfindung darin, den verschiebbaren Arm mit einer solchen Stellfläche zu versehen. Sie kann mit dem verschiebbaren Arm einstückig sein. Es können beide Arme eine Stellfläche aufweisen.

Das Öffnen der erfindungsgemäßen Halterung erfolgt vorzugsweise mittels eines Federelements, das am Schwenkarm angreift und diesen in seine stehende Lage verschwenkt. Über die gelenkige Verbindung des Schwenkarms mit dem verschiebbaren Arm gelangt der verschiebbare Arm dabei in seine Haltestellung, wobei die Halteflügel von ihren Steuernocken ausgeschwenkt werden. In seiner liegenden Stellung ist der Schwenkarm der erfindungsgemäßen Halterung beispielsweise mittels einer ansich bekannten Herzkurvensteuerung verriegelbar. Durch Druck auf den Schwenkarm wird dieser entriegelt und die erfindungsgemäße Halterung öffnet sich von selbst in ihre Haltestellung.

Die Öffnungsbewegung der erfindungsgemäßen Halterung wird bei einer Ausgestaltung mittels eines Dämpfungselements gedämpft.

Die Erfindung wird nachfolgend anhand eines in der Zeichnung dargestellten Ausführungsbeispiels näher erläutert.

Es zeigen:
- Figur 1: eine erfindungsgemäße Halterung in geschlossener Stellung in Seitenansicht;
- Figur 2: eine perspektivische Darstellung der Halterung aus Figur 1;
- Figur 3: die Halterung aus Figur 1 in offener Stellung;
- Figur 4: eine perspektivische Darstellung der Halterung aus Figur 1 in offener Stellung;
- Figur 5: eine perspektivische Darstellung einer in die erfindungsgemäße Halterung eingestellten Getränkedose.

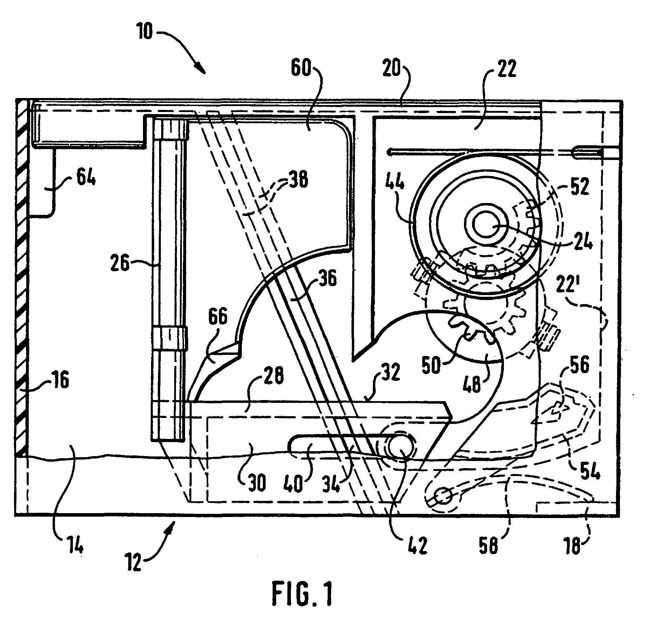

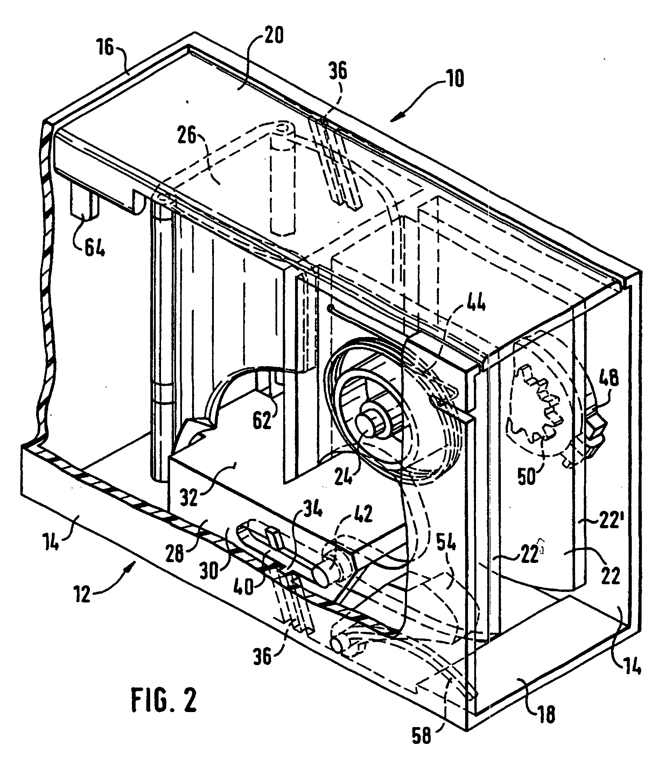

Die in Figuren 1 und 2 in geschlossener Stellung dargestellte erfindungsgemäße Halterung 10 ist zum Einbau in eine etwa horizontale Fläche eines Kraftwagens, beispielsweise in die Mittelkonsole vorgesehen. Sie weist ein als Spritzgußteil hergestelltes Gehäuse 12 mit zwei rechteckigen Seitenwänden 14 auf, die parallel mit Abstand voneinander angeordnet sind. Die beiden Seitenwände 14 werden von einer Stimwand 16 sowie von einem Steg 18 verbunden, der an der Unterseite des Gehäuses 12 an der der Stimwand 16 gegenüberliegenden Seite angeordnet ist. Die Oberseite, die der Stirnwand 16 gegenüberliegende Seite und die Unterseite mit Ausnahme des Stegs 18 sind offen. Um den mechanischen Aufbau der erfindungsgemäßen Halterung 10 darstellen zu können, ist die in Figuren 1 und 2 die in Blickrichtung vordere Seitenwand weggeschnitten, so daß der Blick ins Innere der Halterung 10 frei wird.

Im Gehäuse 12 ist ein zungenförmiger Schwenkarm 20 gelagert, der bei geschlossener Halterung 10 am oberen Rand des Gehäuses 12 zwischen den beiden Seitenwänden 14 liegt und so das Gehäuse 12 nach oben verschließt. Der Schwenkarm 20 ist ein in Seitenansicht L-förmiges Spritzgußteil. Er geht an seinem Fuß einstückig in eine zu ihm senkrechte Stellfläche 23 über, die sich bei geschlossener Halterung 10 in das Innere des Gehäuses 12 erstreckt. Einstückig an die Stellfläche 23 schließen sich zwei Seitenwände 22 an, die parallel zueinander innerhalb der Seitenwände 14 des Gehäuses 12 angeordnet sind. Mittels zweier Schwenkzapfen 24, die in Bohrungen in den Seitenwänden 14 des Gehäuses 12 eingreifen, ist der Schwenkarm 20 schwenkbar am Gehäuse 12 gelagert. Die Bohrungen für die Aufnahme der Schwenkzapfen 24 des Schwenkarms 20 in den Seitenwänden 14 des Gehäuses 12 der erfindungsgemäßen Halterung 10 sind mit Abstand zur freien Stimseite und zur Oberseite des Gehäuses 12 angeordnet.

Unter dem Schwenkarm 20 befindet sich bei geschlossener Halterung 10 ein stehend angeordneter, zungenförmiger, nach oben verschiebbarer Arm 26. Dieser ist ebenfalls ein in Seitenansicht L-förmiges Spritzgußteil. Er geht einstückig in ein Fußteil 28 mit zwei Seitenwänden 30 über, die einstückig mit einer Stellfläche 32 an ihrer Oberseite miteinander verbunden sind. Diese beiden Seitenwände 30 sind innerhalb der Seitenwände 14 des Gehäuses 12 in einer Ebene außerhalb der Seitenwände 22 des Schwenkarms 20 angeordnet. Jede der beiden Seitenwände 30 des Fußteils 28 weist eine schräg nach oben verlaufend angeordnete, nach außen abstehende Führungsrippe 34 auf. Diese ist in einer geraden Führungsnut 36 verschiebbar geführt, welche von zwei Rippen 38 gebildet ist, die an Innenseiten der Seitenwände 14 des Gehäuses 12 angespritzt sind. Durch diese Führung 34, 36 ist der verschiebbare Arm 26 parallel nach oben verschiebbar im Gehäuse 12 gehalten.

Die Seitenwände 30 des Fußteils 28 des verschiebbaren Arms 26 weisen je ein horizontales Langloch 40 auf, in das je ein Mitnehmerzapen 42 des Schwenkarms 20 eingreift, der von jeder der beiden Seitenwände 22' des Schwenkarms 20 nach außen absteht.

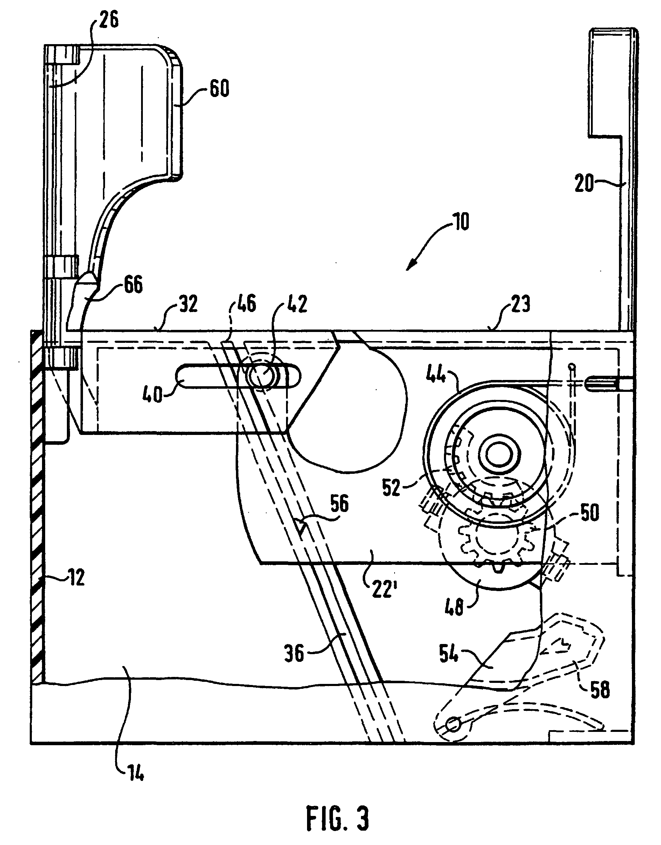

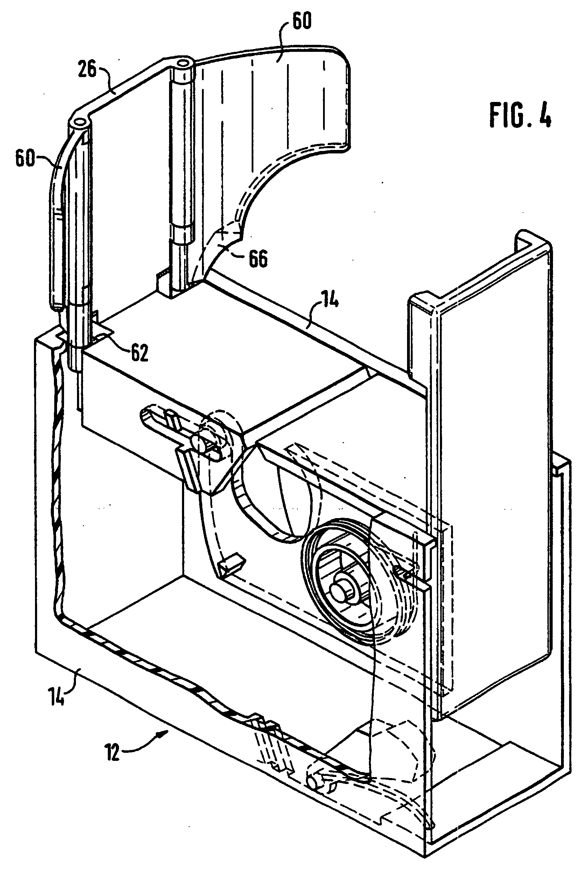

Zum Öffnen der erfindungsgemäßen Halterung 10 in die Figuren 3 und 4 gezeigte Stellung dient eine Schraubentorsionsfeder 44, die an einer Seitenwand 14 des Gehäuses 12 und an einer Seitenwand 22 des Schwenkarms 20 angreift. Der Schwenkarm 20 schwenkt federbetätigt in eine stehende, vertikale Lage, seine Stellfläche 23 schwenkt dabei in horizontale Lage. Bei seiner Schwenkbewegung verschiebt der Schwenkarm 20 den verschiebbaren Arm 26 mittels der Mitnehmerzapfen 42, die in die Langlöcher 40 des verschiebbaren Arms 26 eingreifen, nach oben. Der verschiebbare Arm 26 steht dann senkrecht nach oben aus dem Gehäuse 12 hervor. Seine Stellfläche 32 befindet sich horizontal zwischen den oberen Rändern des Gehäuses 12 und verschließt zusammen mit der Stellfläche 23 des Schwenkarms 20 das Gehäuse 12 nach oben. Die beiden Arme 20, 26 stehen einander parallel gegenüber, ihr Abstand ist geringfügig größer als der Durchmesser eines in die erfindungsgemäße Halterung 10 einzustellenden Getränkebehälters. Ein Endanschlag 46 in der Führungsnut 36 begrenzt die Öffnungsbewegung der Arme 20, 26 der erfindungsgemäßen Halterung 10.

Zur Dämpfung der Bewegung der beiden Arme 20, 26 ist ein ansich bekannter Flüssigkeits-Rotationsdämpfer 48 in die Figuren 1 bis 4 hintere Seitenwand 14 des Gehäuses 12 drehfest eingesetzt. Ein in seiner Rotationsbewegung gedämpftes Zahnrad 50 des Rotationsdämpfers 48 greift in ein mit Strichlinien in Figur 1 dargestelltes Zahnradsegment 52 ein, das an der in Figur 1 hinteren, nicht sichtbaren Seitenwand 22' des Schwenkarms 20 außen angespritzt ist.

Um die erfindungsgemäße Halterung 10 gegen die Kraft der Torsionsfeder 44 geschlossen zu halten, weist sie eine Verriegelungseinrichtung auf: Die Verriegelungseinrichtung hat ein schwenkbar an einer Seitenwand 14 des Gehäuses 12 gelagertes Herzkurventeil 54, in das bei verriegelter Halterung 10 ein seitlich von einer beiden Seitenwände 22 des Schwenkarms abstehender, im Querschnitt dreieckiger Verriegelungszapfen 56 eingreift. Eine Bügelfeder 58, die sich auf dem die beiden Seitenwände 14 des Gehäuses 12 verbindenden Steg 18 abstützt, hält das Herzkurventeil 54 elastisch in seiner Lage. Durch Druck von oben auf den bei geschlossener Halterung 10 liegenden Schwenkarm 20 wird dieser entriegelt und die erfindungsgemäße Halterung öffnet sich selbsttätig in die in Figuren 3 und 4 gezeigte Stellung.

An beiden Seiten des verschiebbaren Arms 26 sind zwei Halteflügel 60 schwenkbar angebracht, die sich bei geschlossener Halterung 10 innerhalb der Seitenwände 14 des Gehäuses 12 in Richtung der offenen Stimseite des Gehäuses 12 erstrecken. An ihrem unteren Ende weisen die Halteflügel 60 radial von ihren Schwenkachsen abstehende Steuernocken 62 auf (Figur 2 und 4), die beim nach oben Verschieben des verschiebbaren Arms 26 in Anlage an Rippen 64 gelangen, die einstückig auf der Innenseite im oberen Bereich der Stirnwand 16 des Gehäuses 12 angebracht sind. Beim Entlanggleiten an diesen Rippen 64 werden die Halteflügel 60 nach außen in eine Stellung verschwenkt, in der sie in etwa in Umfangsrichtung eines in die erfindungsgemäße Halterung 10 einzustellenden Getränkebehälters stehen.

Zum Einschwenken sind Abschnitte der unteren Ränder der Halteflügel 60 spiralförmig als Rückstellflächen 66 ausgebildet, die beim Verschieben des verschiebbaren Arms 26 nach unten in das Gehäuse 12 hinein an oberen Rändern der Seitenwände 14 des Gehäuses 12 zur Anlage kommen und dadurch die Halteflügel 60 bei der Abwärtsbewegung nach innen verschwenken.

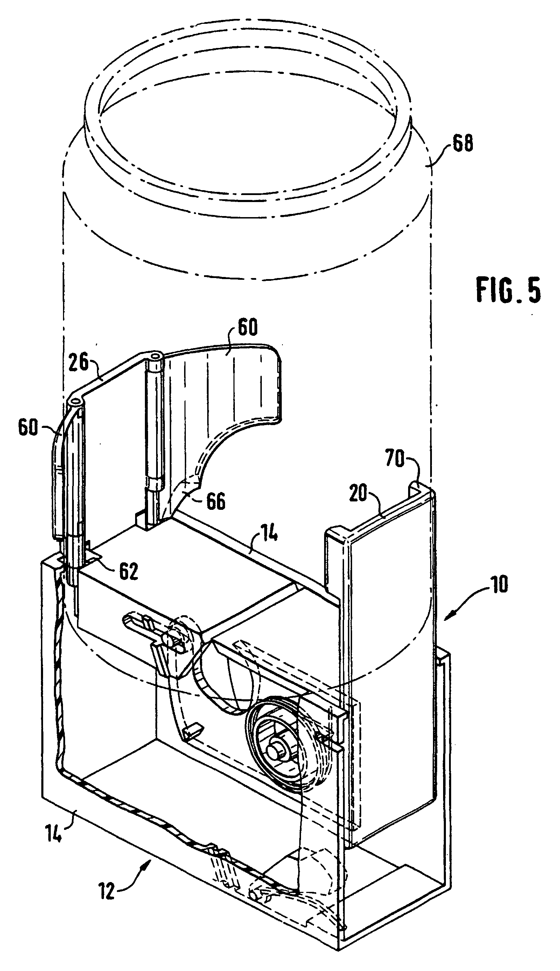

In Figur 5 ist die erfindungsgemäße Halterung 10 mit einer in sie eingestellten Getränkebüchse 68 als Getränkebehälter dargestellt. Der verschiebbare Arm 26 mit den Halteflügeln 60 umgreift einen Umfangsabschnitt der Getränkebüchse 68 über einen verhältnismäßig großen Winkelbereich. Auf der gegenüberliegenden Seite hält der Schwenkarm 20 die Getränkebüchse 68. Er weist dazu in seinem oberen Bereich zwei in Richtung der Getränkebüchse 68 abstehende Rippen 70 auf. An diese Rippen 70 ist ein gummiartiger Überzug angespritzt, mit dem die Rippen 70 an der Getränkebüchse 68 anliegen.

Insbesondere durch die ausschwenkenden Halteflügel 60 wird die Getränkebüchse 68 auf ausreichend großen Umfangsabschnitten umfaßt, um sie sicher zu halten, obwohl die Baubreite der erfindungsgemäßen Halterung 10 nur etwa ein Drittel des Durchmessers der Getränkebüchse 68 beträgt.

## Patentansprüche

1. Halterung (10) für einen Getränkebehälter (68) mit einem aus einer liegenden Stellung in eine stehende Stellung schwenkbaren Schwenkarm (20), der in seiner stehenden Stellung einen Umfangsabschnitt eines in die Halterung (10) eingestellten Getränkebehälters (68) umfaßt, und mit einem verschiebbaren Arm (26), der in einer Führung (34, 36) aus einer versenkten Stellung in eine Haltestellung verschiebbar geführt ist, in der er dem Schwenkarm (20) gegenübersteht und einen gegenüberliegenden Umfangsabschnitt des in die Halterung (10) eingestellten Getränkebehälters (68) umfaßt, wobei die beiden Arme (20, 26) gelenkig miteinander verbunden sind, so daß der Schwenkarm (20) bei seiner Schwenkbewegung in die stehende Stellung den verschlebbaren Arm (26) in dessen Haltestellung anhebt, **dadurch gekennzeichnet, daß** an beiden Seiten des verschiebbaren Arms (26) nach außen in eine etwa in Umfangsrichtung des in die Halterung (10) eingestellten Getränkebehälters (68) stehende Stellung schwenkbarer Halteflügel (60) angebracht ist.

2. Halterung nach Anspruch 1, **dadurch gekennzeichnet, daß** die Halteflügel (60) Steuernocken (62) aufweisen, die bei der Verschiebebewegung des verschiebbaren Arms (26) in die Haltestellung an einer an der Halterung (10) ortfesten Steuerrippe (64) entlanggleiten und dadurch die Halteflügel (60) ausschwenken.

3. Halterung nach Anspruch 1, **dadurch gekennzeichnet, daß** Abschnitte der unteren Ränder der Halteflügel (60) als Rückstellflächen (66) ausgebildet sind, die beim Verschieben des verschiebbaren Arms (26) in die versenkte Stellung an ortfesten Gegenflächen der Halterung (10) entlanggleiten und dadurch die Halteflügel (60) einschwenken.

4. Halterung nach Anspruch 3, **dadurch gekennzeichnet, daß** die Rückstellflächen (66) als Spiralflächen ausgebildet sind.

5. Halterung nach Anspruch 1, **dadurch gekennzeichnet, daß** die Führung des verschiebbaren Arms (26) ungefähr in der Mitte des Verschiebewegs des verschiebbaren Arms (26) tangential zu einer Schwenkachse des Schwenkarms (20) verläuft.

6. Halterung nach Anspruch 1, **dadurch gekennzeichnet, daß** der Schwenkarm (20) eine mit ihm mitschwenkende Stellfläche (23) für den in die Halterung (10) eingestellten Getränkebehälter (68) aufweist, die beim Verschwenken des Schwenkarms (20) in dessen stehende Stellung in eine horizontale Lage gelangt.

7. Halterung nach Anspruch 1, **dadurch gekennzeichnet, daß** der verschiebbare Arm (26) eine Stellfläche (32) für den in die Halterung (10) eingestellten Getränkebehälter (68) aufweist, die sich zusammen mit ihm verschiebt und in der Haltestellung des verschiebbaren Arms (26) eine horizontale Lage einnimmt.

8. Halterung nach Anspruch 1, **dadurch gekennzeichnet, daß** der Schwenkarm (20) federbetätigt in seine stehende Stellung verschwenkt, und daß die Halterung (10) eine Verriegelungseinrichtung (54, 56) aufweist, die den Schwenkarm (20) in seiner liegenden Stellung verriegelt.

## Claims

1. Holding device (10) for a drinks container (68), having a pivot arm (20) that is pivotable from a recumbent position into an upright position and which in its upright position surrounds a portion of the periphery of a drinks container (68) inserted into the holding device (10), and having a displaceable arm (26) which is guided in a guide (34, 36) so as to be displaceable from a recessed position into a holding position in which it stands opposite the pivot arm (20) and surrounds an opposed portion of the periphery of the drinks container (68) inserted into the holding device (10), the two arms (20, 26) being linked with each other so that the pivot arm (20) during its pivoting movement into the upright position raises the displaceable arm (26) into its holding position, **characterized in that** on both sides of the displaceable arm (26) a holding wing (60) pivotable outwards into an upright position approximately in the peripheral direction of the drinks container (68) inserted into the holding device (10) is mounted.

2. Holding device according to Claim 1, **characterized in that** the holding wings (60) have control projections (62) which, during the displacement movement of the displaceable arm (26) into the holding position, slide along on a control rib (64) in a fixed position on the holding device (10) and thereby pivot the holding wings (60) outwards.

3. Holding device according to Claim 1, **characterized in that** portions of the lower edges of the holding wings (60) are constructed as return surfaces (66) which, during the displacement of the displaceable arm (26) into the recessed position, slide along on fixed complementary surfaces of the holding device (10) and thereby pivot the holding wings (60) inwards.

4. Holding device according to Claim 3, **characterized in that** the return surfaces (66) are constructed as helical surfaces.

5. Holding device according to Claim 1, **characterized in that** the guide of the displaceable arm (26) approximately in the centre of the displacement path of the displaceable arm (26) runs tangentially to a pivot axis of the pivot arm (20).

6. Holding device according to Claim 1, **characterized in that** the pivot arm (20) has a setting-down surface (23), pivoting together with it, for the drinks container (68) inserted into the holding device (10), which setting-down surface moves into a horizontal position during the pivoting of the pivot arm (20) into its upright position.

7. Holding device according to Claim 1, **characterized in that** the displaceable arm (26) has a setting-down surface (32) for the drinks container (68) inserted into the holding device (10), which setting-down surface is displaced together with the displaceable arm and assumes a horizontal position in the holding position of the displaceable arm (26).

8. Holding device according to Claim 1, **characterized in that** the pivot arm (20), actuated by a spring, pivots into its upright position, and **in that** the holding device (10) has a locking device (54, 56) which locks the pivot arm (20) in its recumbent position.

## Revendications

1. Support (10) pour un récipient de boisson (68) comprenant un bras pivotant (20) susceptible de pivoter d'une position horizontale vers une position verticale, lequel, dans la position verticale entoure une partie de la périphérie d'un récipient de boisson (68) posé dans le support (10), et un bras coulissant (26), qui peut se déplacer dans un guidage (34, 36) à partir d'une position abaissée vers une position de retenue, dans laquelle il est situé en face du bras pivotant (20) et entoure une partie opposée de la périphérie du récipient de boisson (68) posé dans le support (10), les deux bras (20, 26) étant assemblés l'un avec l'autre de manière articulée, de telle sorte que le bras pivotant (20), pendant son mouvement de pivotement vers la position verticale, soulève le bras coulissant (26) vers sa position de retenue, **caractérisé en ce que**, sur chacun des deux côtés du bras coulissant (26) vers l'extérieur, est fixée une patte de retenue (60) susceptible de pivoter vers une position verticale sensiblement dans le sens périphérique du récipient de boisson (68) posé dans le support (10).

2. Support selon la revendication 1, **caractérisé en ce que** les pattes de retenue (60) sont munies de cames de commande (62), qui pendant le mouvement de coulissement du bras coulissant (26) vers la position de retenue, glissent le long d'une ailette de commande (64) fixe, réalisée contre le support (10), et, de ce fait, les pattes de retenue (60) pivotent vers l'extérieur.

3. Support selon la revendication 1, **caractérisé en ce que** des parties des bords inférieurs des pattes de retenue (60) sont conçues sous forme de surfaces de repositionnement (66) qui, pendant le coulissement du bras coulissant (26) vers la position abaissée, glissent le long de surfaces inverses fixes du support (10) et, de ce fait, les pattes de retenue (60) pivotent vers l'intérieur.

4. Support selon la revendication 3, **caractérisé en ce que** les surfaces de repositionnement (66) sont conçues sous forme de surfaces en spirale.

5. Support selon la revendication 1, **caractérisé en ce que** le guidage du bras coulissant (26) s'étend à peu près au milieu de la trajectoire de déplacement du bras coulissant (26) tangentiellement à un axe de pivotement du bras pivotant (20).

6. Support selon la revendication 1, **caractérisé en ce que** le bras pivotant (20) est muni d'une surface de pose (23) pivotant avec ledit bras pivotant et destinée au récipient de boisson (68) posé dans le support (10), laquelle surface de pose est amenée vers une position horizontale lorsque le bras pivotant (20) pivote vers sa position verticale.

7. Support selon la revendication 1, **caractérisé en ce que** le bras coulissant (26) est muni d'une surface de pose (32) destinée au récipient de boisson (68) posé dans le support (10), laquelle surface de pose se déplace avec ledit bras coulissant et est amenée dans une position horizontale lorsque le bras coulissant (26) est dans la position de retenue.

8. Support selon la revendication 1, **caractérisé en ce que** le bras pivotant (20) est actionné par un ressort pour pivoter vers sa position verticale, et **en ce que** le support (10) comporte un dispositif de blocage (54, 56) qui bloque le bras pivotant (20) dans sa position horizontale.
